Europäisches Patentamt

European Patent Office

Office européen des brevets

(11) Veröffentlichungsnummer: **0 313 816**

**A1**

(12) # EUROPÄISCHE PATENTANMELDUNG

(21) Anmeldenummer: 88115587.3

(51) Int. Cl.⁴: **A01C 3/06 , A01C 15/16**

(22) Anmeldetag: **22.09.88**

(30) Priorität: **24.09.87 CS 6859/87**

(43) Veröffentlichungstag der Anmeldung:
**03.05.89 Patentblatt 89/18**

(84) Benannte Vertragsstaaten:
**DE FR GB SE**

(71) Anmelder: **AGROZET KONCERN
ZEMEDELSKEHO STROJIRENSTVI
Sumavska 31
Brno(CS)**

(72) Erfinder: **Kocián, Miloslav, Dipl.-Ing.
Libkova Voda
Celistná 8(CS)**
Erfinder: **Hunal, Frantisek
Pelhrimov
Sadová 1104(CS)**
Erfinder: **Topic, Jiri
Pelhrimov
Pozárnická 1224(CS)**
Erfinder: **Houdek, Bohuslav
Pelhrimov
Sadová 1102(CS)**

(74) Vertreter: **Patentanwälte Beetz sen. - Beetz
jun. Timpe - Siegfried - Schmitt-Fumian-
Mayr
Steinsdorfstrasse 10
D-8000 München 22(DE)**

(54) **Streuvorrichtung insbesondere für Stalldung, Schlamm und ähnliche Stoffe.**

(57) Die Streuvorrichtung ist am Austragsende eines Transportfahrzeugs angeordnet und weist einen drehangetriebenen Träger (6) auf, an dem als Streuelemente profilierte Schaufeln (7) angeordnet sind. Jede Schaufel (7) hat eine ebene Anlauffläche (8), eine Förderraumfläche (9) und eine ebene Orientierungsfläche (10), wobei die Förderraumfläche kreisbogenförmig ist und durch Schnittlinien (11, 11'), von den ebenen Flächen (8, 10) getrennt ist. Zur Vergrößerung der Streubreite können die profilierten Schaufeln (71, 72) auf dem Träger (6) als linke und rechte Schaufeln symmetrisch angeordnet sein.

FIG.1

## Streuvorrichtung insbesondere für Stalldung, Schlamm und ähnliche Stoffe

Die Erfindung betrifft eine Streuvorrichtung insbesondere für Stalldung, Schlamm und ähnliche Stoffe.

Eine Vielzahl von Stoffen müssen bei der Verlagerung oder bei der Entleerung Von der Ladefläche eines Transportmittels flach ausgestreut werden. Die meisten dieser Stoffe finden in der Landwirtschaft Anwendung, und zwar als Düngemittel und als Viehfutter. Ein relativ geringer Streuungsgrad ist bei der Ablage und Schichtung des Stoffes von dem Transportmittel bei der Gärfutterbereitung erforderlich. Ein wesentlich größerer Streuungsgrad ist bei der Stalldungstreuung auf dem Feld vom fahrenden Transportmittel notwendig. Schließlich müssen Schlämme mit verhältnismäßig kleiner Dosierung und weiter erhöhtem Streuungsgrad ausgebracht werden. Bei ungenügendem Streuungsgrad können erhebliche Schäden entstehen.

Die jeweils eingesetzte Streuvorrichtung bestimmt im wesentlich die Gleichmäßigkeit und Breite der Streuung. Um unerwünschte Verfestigung der Böden durch Radspuren der Fahrzeuge möglichst klein zu halten, wird eine möglichst breite Stoffstreuung angestrebt. Es sind bereits verschiedene Streuvorrichtungen bekannt, und zwar Einzweckvorrichtungen für eine bestimmte Stoffart sowie Universalvorrichtungen zur Ausstreuung von mehreren Stoffarten, welche sich auch durch ihre Leistung und Streuungsbreite unterscheiden. Die Einzweckvorrichtungen sind mit speziellen Transportbehältern kombiniert und haben in der Landwirtschaft den Nachteil einer geringen Ausnutzung bzw. nur zeitweisen Einsatzes. Deshalb werden bevorzugt Mehrzwecktransportmittel mit einer Ladepritsche, einem Schiebeboden und einer Streuvorrichtung verwendet, welche im offenen Austragsteil der Ladepritsche oberhalb des Schiebebodens angeordnet ist. Die Streuvorrichtung enthält in der Regel eine oder mehrere drehangetriebene Streuwalzen mit horizontalen oder vertikalen Drehachsen, auf denen verschiedene Streuelemente, wie zum Beispiel Ketten, Daumen, Finger, Spiralschaufeln mit Anschlägen u. ä., befestigt sind. Die Nachteile der Streuvorrichtungen mit horizontalen Walzen liegen in der geringen Streuungsbreite und der beträchtlichen Streuungsunregelmäßigkeit, vor allem bei geringer Dosierung. Streuvorrichtungen mit mehreren vertikalen Streuwalzen haben zwar eine breitere Streuwirkung, sind jedoch konstruktiv aufwendig und streuen mit ungenügender Gleichmäßigkeit über die ganze Eingriffsbreite. Die beste Regelmäßigkeit der Streuung und der Eingriffsbreite hat ein Stalldungstreuer, dessen Streuvorrichtung mehrere Streuschaufeln mit vertikaler Drehachse enthält und unterhalb des Austragsteils des Transportmittels angeordnet ist. Zusätzlich ist eine Auswerf- und Orientierungswalze mit horizontaler Drehachse vorgesehen. Hauptnachteile dieser Ausführung liegen im hohen Herstellungs- und Kostenaufwand, so daß diese Lösung bevorzugt bei Streuern mit höherer Tonnage und Leistung und bei ausreichender Betriebsauslastung anwendbar ist.

Aufgabe der Erfindung ist es, eine Streuvorrichtung insbesondere für Stalldung, Schlamm und ähnliche Stoffe zu schaffen, welche die Nachteile bekannter Streuer beseitigt, für verschiedene Stoffarten mit verbesserter Streuungsgenauigkeit und Streubreite anwendbar ist sowie aufgrund der technisch einfachen und robusten Ausführung auch für Transportmittel mit niedrigerer Tragfähigkeit geeignet ist.

Diese Aufgabe der Erfindung wird dadurch gelöst, daß die Streuvorrichtung mindestens einen Träger und daran angeordnete profilierte Schaufeln enthält, welche eine ebene Anlauffläche, eine Förderraumfläche und eine ebene Orientierungsfläche aufweisen, wobei die ebene Anlauffläche mit einer vorderen Kante versehen ist.

Die Vorteile der erfindungsgemäßen Streuvorrichtung ergeben sich insbesondere aus den räumlich profilierten Schaufeln, welche auf einem Träger mit einem kreisförmigen oder einem anderen, z. B. quadratischen Querschnitt befestigt sind. Die profilierte Schaufel trennt durch ihre ebene Anlauffläche in Zusammenarbeit mit der Förderraumfläche im wesentlichen gleiche Stoffteile vom Ladegut ab und fördert sie auf die ebene Orientierungsfläche, welche die Teilchen zerstreut. Hohe Effekte von dem Herstellungs-und Funktionsstandpunkt werden erzielt, wenn sich die Schnittlinien, welche die Förderraumfläche von der ebenen Anlauffläche und der ebenen Orientierungsfläche trennen, mit dem Träger im Knotenpunkt schneiden.

Gemäß anderen Merkmalen ist eine Verteilung der profilierten Schaufeln auf dem Trägerumfang vorteilhaft, bei der die vordere Kante der ebenen Anlaufflächen der einen profilierten Schaufel die hintere Kante der ebenen Orientierungsfläche der vorhergehenden profilierten Schaufel überragt, wobei die Förderraumfläche der Schaufel in einem äußeren Bogen endet, der im hinteren Teil eine Herabsetzung aufweist, welche der Überdeckung der anschließenden Profilschaufeln entspricht. Zur Vergrößerung der Streuungsbreite und -regelmäßigkeit sollen die profilierten Schaufeln auf dem Träger als rechte und linke symmetrisch angeordnet werden. Für die Festigkeitserhöhung der profilierten Schaufeln ist vorteilhaft auf der Förderraumfläche eine Durchpressung oder eine Versteifung durchzuführen.

Weitere Merkmale und Besonderheiten der Erfindung ergeben sich aus der folgenden Beschreibung von Ausführungsbeispielen anhand der schematischen Zeichnung. Es zeigen:

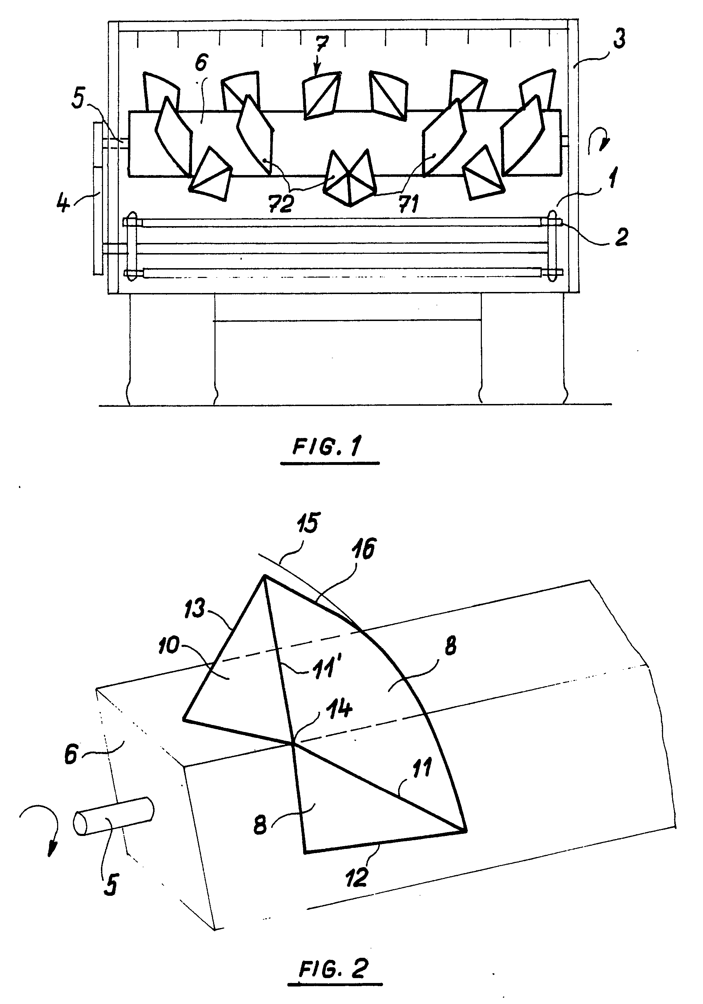

Fig. 1 ein Streufahrzeug insbesondere für Stalldung, Schlamm und ähnliche Stoffe in schematischer Hinteransicht,

Fig. 2 eine räumlich profilierte Schaufel an einem quadratischen Träger in axonometrischer Ansicht,

Fig. 3 ein Detail der Streuvorrichtung mit dem Quadratträger,

Fig. 4 eine Ausführung mit einem zylindrischen Schaufelträger,

Fig. 5 eine bevorzugte Anordnung der linken und rechten Schaufeln an einem abgewickelt dargestellten Träger.

Die dargestellte Streuvorrichtung ist zum Ausstreuen von Stalldung, Schlamm und ähnlichen Stoffen besonders geeignet und auf einem Transportfahrzeug montiert, das eine Ladepritsche 1, einen Schiebeboden 2, Seitenwände 3 und einen Austragsantrieb 4 aufweist. Die Streuvorrichtung enthält mindestens einen Träger 6, auf welchem räumlich profilierte Schaufeln 7 befestigt sind und der mit seiner horizontalen Welle 5 an dem Austragsende der Ladepritsche 1 gelagert ist. Die Welle 5 mit dem Träger 6 kann entweder horizontal oder vertikal ausgerichtet sein. Die Anzahl an Streuelementen 6, 7 wird durch die Leistung, durch die Dosiergröße und durch die Tragfähigkeit des Transportmittels bestimmt. Bei der Ausführung mit horizontalem Träger 6 wird vorteilhaft am Austragsende der Ladepritsche 1 nur eine Welle 5 mit dem Träger 6 angeordnet. Bei mehreren Streuelementen sollten diese mit gleichem Drehsinn umlaufen. Bei Ausführungen mit vertikaler Achse sollte eine gerade Anzahl an Streuelementen 6, 7 gewählt werden, wobei die Streuelemente auf der einen Hälfte gegensinnig zu den Streuelementen auf der zweiten Hälfte der Ladepritsche 1 rotieren sollten. Zur Erzielung einer besonders gleichmäßigen Streuwirkung ist vorteilhaft, daß auf den horizontalen Trägern 6 die profilierten Schaufeln 7 als rechte Schaufeln 71 und als linke Schaufeln 72 angeordnet werden.

Die räumlich profilierten Schaufeln 7 haben eine ebene Anlauffläche 8, an welche eine Förderraumfläche 9 und eine ebene Orientierungsfläche 10 so anschließen, daß die Förderraumfläche 9 durch die Schnittlinien 11, 11′ begrenzt wird. Es ist vorteilhaft, wenn sich die Schnittlinie 11 zwischen der Förderraumfläche 9 und der ebenen Anlauffläche 8 mit der Schnittlinie 11′ zwischen der Förderraumfläche 9 und der ebenen Orientierungsfläche 10 in einem Knotenpunkt 14 am Träger 6 schneiden. Die profilierten Schaufeln 7 sind auf dem Umfang des Trägers 6 im wesentlichen gleichmäßig verteilt angeordnet, wobei es vorteilhaft ist, wenn die Vorderkante 12 der Anlauffläche 8 der einen Schaufel 7 die Hinterkante 13 der Orientierungsfläche 10 der vorhergehenden Schaufel 7 seitlich überdeckt. Die Außenkante der räumlich profilierten Schaufeln 7 hat in Seitenansicht die Form eines Kreisbogens 15. Wenn die profilierten Schaufeln 7 versetzt sind, dann hat vorteilhaft die Förderraumfläche 9 im Bereich 16 der anknüpfenden Schaufeln 7 eine herabgesetzte Höhe. Die ebenen Anlaufflächen 8, die Förderraumflächen 9 und die ebenen Orientierungsflächen 10 sind aus funktionalen und Herstellungsgründen am besten als die Durchdringungen der ebenen Flächen ausgebildet. Die einzelnen Flächen können aber auch andere Formen aufweisen, sie müssen jedoch aneinander anknüpfen und durch die Schnittlinien 11, getrennt sein. Zumindest eine der Flächen, insbesondere die Förderraumfläche 9 kann durch Sicken oder Streben usw. versteift sein.

Die erfindungsgemäße Streuvorrichtung arbeitet wie folgt: Der in der Ladepritsche 1 gelagerte Stoff wird mittels des Schiebebodens 2 zu dem Träger 6 mit den profilierten Schaufeln 7 der Streuvorrichtung gefördert. Durch die Drehung des Trägers 6 dringen die einzelnen profilierten Schaufeln 7 mit ihrer Vorderkante 12 in den herangeführten Stoff ein und trennen mittels der ebenen Anlauffläche 8 und eines Teils der Förderraumfläche 9 Stoffteile ab. Durch die regelmäßige Verteilung der profilierten Schaufeln 7 auf dem Umfang des Trägers 6 und durch ihre bestimmte Versetzung wird eine regelmäßige Verteilung der Stoffe und ihr folgendes Flächenstreuen ermöglicht. Die größte Streubreite wird bei einer Verteilung auf rechte Schaufeln 71, welche das Stoffstreuen auf die rechte Hälfte orientieren, und auf linke Schaufeln 72 erzielt, welche die Stoffstreuung auf die linke Hälfte bei optimaler Neigung der profilierten Schaufeln 7 zur Drehachse des Trägers 6 orientieren, wie dies in Fig. 5 dargestellt ist. Bei dieser Ausführung sind die Schaufeln 7, 71, 72 in besonderer Weise gruppiert, um eine gleiche Streuwirkung über die gesamte Streubreite zu erzielen.

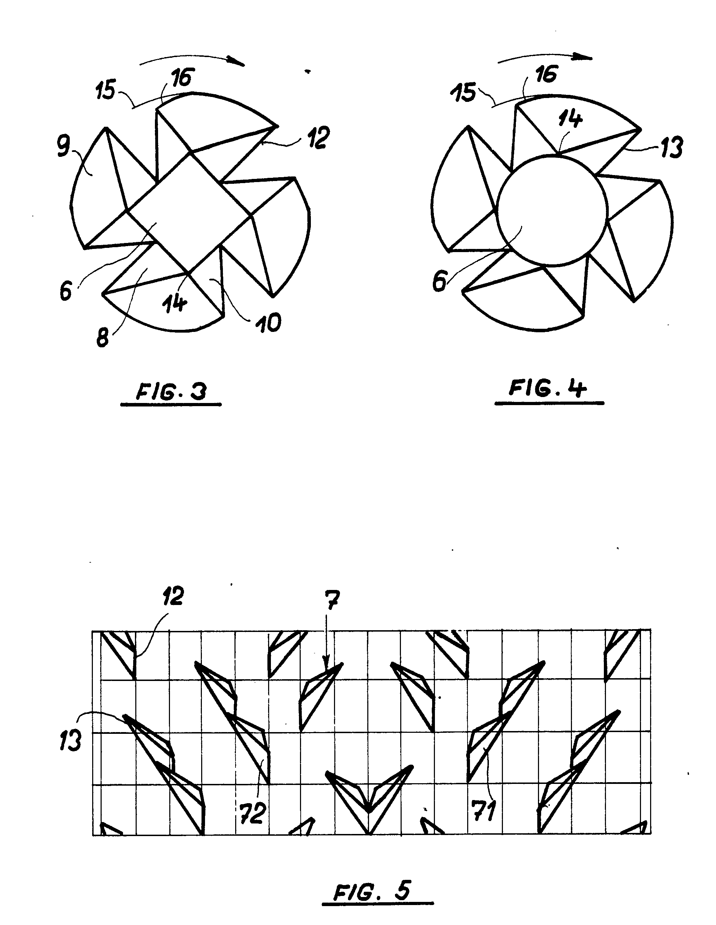

Bei den Ausführungen nach Fig. 3 und 4 sind jeweils vier Schaufeln 7 über den Trägerumfang gleichmäßig verteilt angeordnet. Wie ersichtlich, ist die gerade Vorderkante 12 der ebenen Anlauffläche 8 in dieser Darstellung etwa radial zur Trägerachse ausgerichtet. Die Übergangs- bzw. Trennkanten 11, 11′ und die Hinterkante 13 der Schaufeln 7 sind unter geeigneten Winkeln geneigt.

Die erfindungsgemäße Lösung wird bevorzugt zum Ausstreuen von Stalldung, Schlamm und ähnlichen Stoffen auf Felder unter Verwendung von Transportfahrzeugen mit relativ geringer Tragfähigkeit eingesetzt, wobei nur eine Streuwalze mit horizontaler Drehachse genügt. Nach dem Anbau eines geeigneten Orientierungsschilds kann die Streuvorrichtung auch für die Silage bei der Entleerung und Schichtung eingesetzt werden.

**Ansprüche**

1. Streuvorrichtung, insbesondere zum Ausstreuen von Stalldung, Schlamm und ähnlichen Stoffen, bestehend aus mindestens einem drehangetriebenen Träger (6) mit daran befestigten Streuelementen,
**dadurch gekennzeichnet,**
daß die Streuelemente räumlich profilierte Schaufeln (7) sind, welche eine ebene Anlauffläche (8), eine Förderraumfläche (9) und eine ebene Orientierungsfläche aufweisen, wobei die ebene Anlauffläche (8) eine vordere Schneidkante (12) hat.

2. Streuvorrichtung nach Anspruch 1,
**dadurch gekennzeichnet,**
daß die gewölbte Förderraumfläche (9) über Trennlinien 11, 11', mit der Anlauffläche (8) und der Orientierungsfläche (10) verbunden sind, die sich am Träger (6) in einem Knotenpunkt (14) schneiden.

3. Streuvorrichtung nach Anspruch 1 oder 2,
**dadurch gekennzeichnet,**
daß die vordere Kante (12) der Anlauffläche (8) der einen profilierten Schaufel (7) die hintere Kante (13) der ebenen Orientierungsfläche (10) der vorhergehenden profilierten Schaufel (7) überragt.

4. Streuvorrichtung nach einem der Ansprüche 1 bis 3,
**dadurch gekennzeichnet,**
daß die Förderraumfläche (9) in einem äußeren Kreisbogen (15) endet, der in dem hinteren Teil in eine Herabsetzung (16) übergeht, deren Länge der Überdeckung der nachfolgenden Schaufel (7) entspricht.

5. Streuvorrichtung nach einem der Ansprüche 1 - 4,
**dadurch gekennzeichnet,**
daß die Schaufeln (7) über den Umfang des zylindrischen oder eckigen Trägers (6) gleichmäßig verteilt angeordnet sind.

6. Streuvorrichtung nach Anspruch 5,
**dadurch gekennzeichnet,**
daß die Schaufeln (71, 72) symmetrisch zur Mittellinie (6') des Trägers (6) angeordnet und gegensinnig ausgerichtet sind.

FIG. 1

FIG. 2

FIG. 3

FIG. 4

FIG. 5

Europäisches
Patentamt

# EUROPÄISCHER RECHERCHENBERICHT

Nummer der Anmeldung

EP 88 11 5587

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| A | DE-A-3 232 905  (E. WEICHEL)<br>* Figur 1 *<br>--- | 1 | A 01 C   3/06<br>A 01 C  15/16 |
| A | US-A-1 777 127  (J. ORELIND)<br>* Figuren 1 - 3 *<br>--- | 1 | |
| A | DE-U-1 755 187  (H. BARTLING)<br>--- | 1 | |
| A | FR-A-1 115 915  (A. CALVET et al.)<br>* Figuren 3 - 5 *<br>--- | 1 | |
| A | FR-A-  998 267  (MARKHAM TRACTION)<br>* Figuren 1, 3, 5 *<br>--- | 1 | |
| A | US-A-3 295 855  (L. SADLER et al.)<br>* Figur 2 *<br>--- | 1 | |
| A | US-A-2 240 720  (B. SELHORST)<br>* Figuren 1, 3, 5 *<br>--- | 1 | |
| A | US-A-2 673 741  (E. DURAND)<br>* Figur 3 *<br>--- | 1 | RECHERCHIERTE SACHGEBIETE (Int. Cl.3) |
| A | DE-C-   86 911  (L. SCHLENDER & CO)<br>* Figuren 1 - 3 *<br>--- | 1 | A 01 C   3/00<br>A 01 C   7/00 |
| A | DE-C-   54 672  (C. LUEDECKE)<br>* Figur 6 *<br>--- | 1 | A 01 C  15/00<br>A 01 F  29/00 |
| A | DE-C-  375 118  (FRIED. KRUPP)<br>* Figur 2 *<br>--- | 1 | |
| A | DE-C-   50 620  (L. SCHLENDER)<br>* Figur 5, 5a *<br>----- | 1 | |

Der vorliegende Recherchenbericht wurde für alle Patentansprüche erstellt

| Recherchenort | Abschlußdatum der Recherche | Prüfer |
|---|---|---|
| BERLIN | 14-12-1988 | SAMWEL P.N. |

EPO FORM 1503 03.82 (P0403)